# EUROPEAN PATENT APPLICATION

(11) **EP 2 244 367 A1**
(43) Date of publication of application: **27.10.2010**
(21) Application number: 09158575.2
(22) Date of filing: 23.04.2009
(51) Int. Cl.: H02M 3/158

(54) **3-level interleaved boost converter assembly**

(71) Applicant: ABB Research Ltd., 8050 Zürich (CH)
(72) Inventor: Coccia, Antonio, 8050 Zürich (CH); Canales, Francisco, 8050 Zürich (CH); Serpa, Leonardo-Augusto, 8050 Zürich (CH); Paakkinen, Mikko, 8050 Zürich (CH)
(74) Representative: Valkeiskangas, Tapio Lassi Paavali

(57) **Abstract**

A boost converter assembly (4) comprising a booster input (41), a booster output (42), a boost converter unit (BCU1) and a control unit (CU), the booster input (41) being adapted to be connected to a direct voltage supply feeding an input direct voltage (DC_{IN}), the boost converter unit (BCU1) comprising a controllable switch (S₁₁) and an input inductor (L₁₁), the boost converter assembly (4) being adapted to convert the input direct voltage (DC_{IN}) into an output direct voltage (DC_{OUT}) that is higher than the input direct voltage (DC_{IN}) and to feed the output direct voltage (DC_{OUT}) into the booster output (42). The boost converter assembly (4) further comprises at least one additional boost converter unit (BCU2, BCU3), each additional boost converter unit (BCU2) comprising a controllable switch (S₂₁) and an input inductor (L₂₁), the boost converter units of the boost converter assembly being connected in parallel, the control unit (CU) being adapted to control the controllable switches (S₁₁ to S₃₂) of the boost converter units such that a phase shift exists between operations of different boost converter units (BCU1, BCU2, BCU3).

## Description

### BACKGROUND OF THE INVENTION

The present invention relates to a boost converter assembly according to the preamble of independent claim 1.

A boost converter is a power converter adapted to raise direct voltage. The operation of a boost converter is based on co-operation between an inductor and a controllable switch such that the inductor is repeatedly charged and discharged. Due to the operational principle of a boost converter, the input current of the boost converter includes a lot of ripple. An input current of a boost converter can be smoothed by increasing inductance of an input inductor.

One of the problems associated with a basic two-level boost converter is that an input inductor of a high power and/or high voltage system is a large and expensive component. It is known to alleviate this problem by using a three-level boost converter.

### BRIEF DESCRIPTION OF THE INVENTION

An object of the present invention is to further reduce an input current ripple of a boost converter. The object of the invention is achieved by a boost converter assembly which is characterized by what is stated in the independent claim 1. Preferred embodiments of the invention are disclosed in the dependent claims.

The invention is based on the idea of connecting a plurality of boost converter units in parallel and controlling the parallel connected boost converter units such that a phase shift exists between operations of individual boost converter units.

An advantage of the boost converter assembly of the invention is that the input current ripple is reduced.

### BRIEF DESCRIPTION OF THE DRAWINGS

In the following, the invention will be described in greater detail by means of preferred embodiments and with reference to the attached drawings, in which
Figure 1 shows a connection diagram of a solar power station comprising a boost converter assembly according to an embodiment of the invention; and
Figure 2 shows the connection diagram of Figure 1 with alternative inverter means.

### DETAILED DESCRIPTION OF THE INVENTION

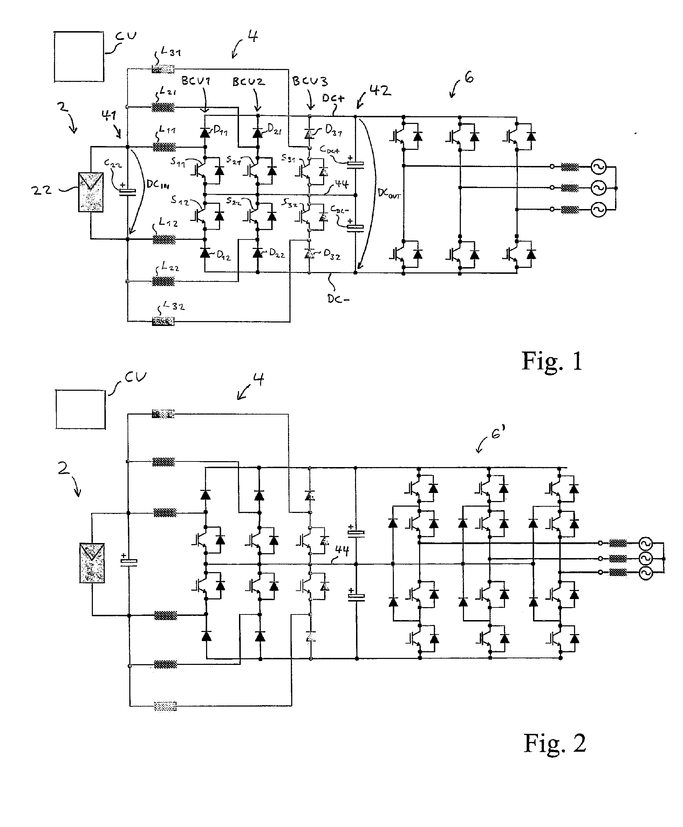

Figure 1 shows a connection diagram of a solar power station comprising a photovoltaic cell means 2, a boost converter assembly 4 and inverter means 6. The photovoltaic cell means 2 include a photovoltaic cell 22 adapted to convert solar energy into direct current. The boost converter assembly 4 comprises a booster input 41, three parallel connected boost converter units BCU1, BCU2 and BCU3, a booster output 42, capacitor means and a control unit CU.

The photovoltaic cell means 2 are adapted to feed an input direct voltage DC_{IN} into the booster input 41. A photovoltaic cell capacitor C₂₂ is connected between the positive terminal and the negative terminal of the photovoltaic cell 22. The boost converter assembly 4 is adapted to convert the input direct voltage DC_{IN} into an output direct voltage DC_{OUT} that is higher than the input direct voltage DC_{IN} and to feed the output direct voltage DC_{OUT} into the booster output 42.

Each of the boost converter units BCU1, BCU2 and BCU3 is a three-level boost converter unit. The structure of each of the boost converter units BCU1, BCU2 and BCU3 is similar to the structure of a known three-level boost converter. The boost converter units BCU1, BCU2 and BCU3 are identical with each other.

Each boost converter unit BCU1, BCU2 and BCU3 comprises two controllable switches and for each of said controllable switches an input inductor and a flyback diode. The boost converter unit BCU1 comprises controllable switches S₁₁ and S₁₂, input inductors L₁₁ and L₁₂, and flyback diodes D₁₁ and D₁₂. The boost converter unit BCU2 comprises controllable switches S₂₁ and S₂₂, input inductors L₂₁ and L₂₂, and flyback diodes D₂₁ and D₂₂. The boost converter unit BCU3 comprises controllable switches S₃₁ and S₃₂, input inductors L₃₁ and L₃₂, and flyback diodes D₃₁ and D₃₂.

The control unit CU of the boost converter assembly is adapted to control the controllable switches S₁₁ to S₃₂ of the boost converter units BCU1, BCU2 and BCU3 such that a phase shift of 2π/3 radians exists between operations of different boost converter units. The phase shift of the boost converter unit BCU1 is zero radians, the phase shift of the boost converter unit BCU2 is 2π/3 radians (120°), and the phase shift of the boost converter unit BCU3 is 4π/3 radians (240°). Due to the phase shift between them, the boost converter units BCU1, BCU2 and BCU3 may be called interleaved boost converter units. The phase shift between modulations of the boost converter units reduces the input current ripple of the boost converter assembly because current peaks generated by different boost converter units occur at predetermined periods.

Figure 1 does not depict signal paths between the control unit CU and the controllable switches S₁₁ to S₃₂. Said signal paths may be realized with suitable known components.

In an alternative embodiment the boost converter assembly may comprise only two boost converter units or more than three boost converter units. In a general case the control unit may be adapted to control the controllable switches of the boost converter units such that the phase shift between operations of different boost converter units is substantially equal to a quotient of 2π radians and a total number of boost converter units.

The boost converter assembly 4 comprises a positive voltage bus bar DC+ and a negative voltage bus bar DC-. The cathodes of the flyback diodes D₁₁, D₂₁ and D₃₁ are connected to the positive voltage bus bar DC+, and the anodes of the flyback diodes D₁₂, D₂₂ and D₃₂ are connected to the negative voltage bus bar DC-. The positive terminal of the booster output 42 is connected to the positive voltage bus bar DC+ such that the positive terminal of the booster output 42 and the positive voltage bus bar DC+ are in the same electric potential. The negative terminal of the booster output 42 is connected to the negative voltage bus bar DC- such that the negative terminal of the booster output 42 and the negative voltage bus bar DC- are in the same electric potential.

The inverter means 6 include a conventional three phase full bridge inverter. The three phase full bridge inverter is connected between the positive terminal of the booster output 42 and the negative terminal of the booster output 42.

The boost converter assembly 4 further comprises a centre point bus bar 44 which connects together a point between series connected controllable switches S₁₁ and S₁₂, a point between series connected controllable switches S₂₁ and S₂₂, and a point between series connected controllable switches S₃₁ and S₃₂.

The capacitor means are adapted to operate as an energy storage. The capacitor means comprise capacitors C_{DC+} and C_{DC-} connected in series between the positive terminal and the negative terminal of the booster output 42. The capacitors C_{DC+} and C_{DC-} also provide a voltage divider for the booster output 42. The centre point bus bar 44 is connected between the negative terminal of capacitor C_{DC+} and the positive terminal of capacitor C_{DC-}.

Due to the phase shift between the boost converter units BCU1, BCU2 and BCU3, a voltage ripple of the capacitors C_{DC+} and C_{DC-} is only one sixth compared to a corresponding boost converter assembly with no phase shift between boost converter units. Consequently, the present invention makes it possible to furnish capacitor means with smaller capacitors without compromising the quality of the output current of the capacitor means. Alternatively, the present invention makes it possible to improve the quality of the output current of the capacitor means without increasing the capacitance of the capacitor means.

The phase shift between modulations of different boost converter units raises ripple current frequency. This makes it easier to filter the ripple current.

The control unit CU is adapted to monitor the power fed by the photovoltaic cell means 2 into the booster input 41 and to turn off at least one of the boost converter units in partial load operating situations where only some of the plurality of boost converter units are needed to handle the output power of the photovoltaic cell means 2. For example, if the output power of the photovoltaic cell means 2 is only two thirds of the nominal power of the boost converter assembly 4, the control unit CU turns off the boost converter unit BCU3. If the output power of the photovoltaic cell means 2 is only one third of the nominal power of the boost converter assembly 4, the control unit CU turns off both the boost converter unit BCU3 and the boost converter unit BCU2. Turning off excess boost converter units saves energy since a turned off boost converter unit does not consume energy. In this application turning off a boost converter unit means discontinuing feeding of a control signal to the controllable switches of the boost converter unit wherein the controllable switches stay in an open state all the time.

The control unit CU is adapted, in situations where only some of the boost converter units BCU1, BCU2 and BCU3 are active, to readjust the phase shift between the active boost converter units. When only the boost converter units BCU1 and BCU2 are active, the control unit CU readjusts the phase shift between their operations to π (180°). One skilled in the art understands that corresponding readjustment of the phase shift is also possible in a case of a boost converter assembly having more than three boost converter units. For example, if there are six boost converter units in total, and two boost converter units are temporarily turned off as redundant, the phase shift between the remaining four boost converter units is readjusted to π/2 (90°).

The phase shift between the controllable switches of an individual three level boost converter unit is substantially equal to a quotient of π radians and the number of active boost converter units. Consequently, when all boost converter units BCU1, BCU2 and BCU 3 are active, the phase shift between controllable switches S₁₁ and S₁₂ of the boost converter unit BCU1 is π/3 (60°). The same applies to controllable switches S₂₁ and S₂₂ of the boost converter unit BCU2, and controllable switches S₃₁ and S₃₂ of the boost converter unit BCU3.

The table below shows phase shifts of the controllable switches of the boost converter assembly depicted in Figure 1 when all boost converter units are active. In the table below the operation of controllable switch S₁₁ is defined to be the reference and therefore the phase shift of S₁₁ is zero radians.

| BCU1 | | BCU2 | | BCU3 | |
|---|---|---|---|---|---|
| S₁₁ | 0 | S₂₁ | 2π/3 (120°) | S₃₁ | 4π/3 (240°) |
| S₁₂ | π/3 (60°) | S₁₂ | 3π/3 (180°) | S₁₂ | 5π/3 (300°) |

In embodiments where the control unit of the boost converter assembly is adapted to turn off redundant boost converter units the phase shift between operations of different active boost converter units is preferably calculated by means of the number of active boost converter units rather than by means of the total number of boost converter units. Similarly, if the boost converter units are at least three level boost converter units and the control unit is adapted to turn off redundant boost converter units, then the phase shift between the controllable switches of each boost converter unit is preferably calculated by means of the number of active boost converter units rather than by means of the total number of boost converter units.

Figure 2 shows a connection diagram of a solar power station which is otherwise identical to the solar power station of Figure 1 but the inverter means 6 of Figure 1 have been replaced by inverter means 6'. The inverter means 6' include a three-level neutral point clamped inverter the neutral point of which is connected to the centre point bus bar 44 of the boost converter assembly 4. The connection between the neutral point of the inverter and the centre point bus bar 44 of the boost converter assembly 4 facilitates the operation of the inverter means by balancing the voltage in the inverter.

In an alternative embodiment of the invention the inverter means may comprise a five-level inverter or a higher level inverter.

A boost converter assembly according to the present invention may comprise two-level boost converter units instead of three-level boost converter units. It is also possible to use four-level boost converter units or higher level boost converter units.

It will be obvious to a person skilled in the art that the inventive concept can be implemented in various ways. The invention and its embodiments are not limited to the examples described above but may vary within the scope of the claims.

## Claims

1. A boost converter assembly (4) comprising a booster input (41), a booster output (42), a boost converter unit (BCU1) and a control unit (CU), the booster input (41) being adapted to be connected to a direct voltage supply feeding an input direct voltage (DC_{IN}), the boost converter unit (BCU1) comprising a controllable switch (S₁₁) and an input inductor (L₁₁), the boost converter assembly (4) being adapted to convert the input direct voltage (DC_{IN}) into an output direct voltage (DC_{OUT}) that is higher than the input direct voltage (DC_{IN}) and to feed the output direct voltage (DC_{OUT}) into the booster output (42), **characterized in that** the boost converter assembly (4) further comprises at least one additional boost converter unit (BCU2, BCU3), each additional boost converter unit (BCU2) comprising a controllable switch (S₂₁) and an input inductor (L₂₁), the boost converter units of the boost converter assembly being connected in parallel, the control unit (CU) being adapted to control the controllable switches (S₁₁ to S₃₂) of the boost converter units such that a phase shift exists between operations of different boost converter units (BCU1, BCU2, BCU3).

2. A boost converter assembly according to claim 1, **characterized in that** the phase shift between operations of different boost converter units (BCU1, BCU2, BCU3) is substantially equal to a quotient of 2π radians and a total number of boost converter units.

3. A boost converter assembly according to claim 2, **characterized in that** each boost converter unit (BCU1) is a three level boost converter unit comprising two controllable switches (S₁₁, S₁₂), and that a phase shift between the two controllable switches of each three level boost converter unit is substantially equal to quotient of π radians and a total number of boost converter units.

4. A boost converter assembly according to any of claims 1 to 3, **characterized in that** the boost converter units (BCU1, BCU2, BCU3) of the boost converter assembly (4) are identical with each other.

5. A boost converter assembly according to claim 1, **characterized in that** the control unit (CU) of the boost converter assembly is adapted to monitor power fed into the booster input (41) and to turn off at least one of the boost converter units (BCU1, BCU2, BCU3) in partial load operating situations where only some of the plurality of boost converter units are needed to handle the power fed into the booster input.

6. A boost converter assembly according to claim 5, **characterized in that** the control unit (CU) is adapted to control the boost converter units such that the phase shift between operations of different active boost converter units (BCU1, BCU2, BCU3) is substantially equal to a quotient of 2π radians and the number of active boost converter units.

7. A boost converter assembly according to claim 6, **characterized in that** each boost converter unit (BCU1) is a three level boost converter unit comprising two controllable switches (S₁₁, S₁₂), and that the control unit (CU) is adapted to control the controllable switches such that a phase shift between the two controllable switches of each three level boost converter unit is substantially equal to a quotient of π radians and the number of active boost converter units.

8. A boost converter assembly according to any preceding claim, **characterized in that** the boost converter assembly further comprises capacitor means connected between the positive and the negative terminal of the booster output (42), the capacitor means being adapted to operate as a an energy storage.

9. A solar power station comprising photovoltaic cell means (2) having at least one photovoltaic cell (22) adapted to convert solar energy into direct current, **characterized in that** the solar power station further comprises a boost converter assembly (4) according to any preceding claim, the at least one photovoltaic cell (22) being connected to the booster input (41).
